# EUROPÄISCHE PATENTSCHRIFT

(11) **EP 0 543 216 B1**
(45) Veröffentlichungstag und Bekanntmachung des Hinweises auf die Patenterteilung: **31.01.1996**
(21) Anmeldenummer: 92118839.7
(22) Anmeldetag: 04.11.1992
(51) Int. Cl.: B23D 21/08

(54) **Vorrichtung zum Abschneiden von Rohren**
Tube cutter
Dispositif pour couper des tubes

(30) Priorität: 16.11.1991 DE 4137808
(43) Veröffentlichungstag der Anmeldung: 26.05.1993
(73) Patentinhaber: Weisshaar, Erhard, D-78176 Blumberg (DE)
(72) Erfinder: Weisshaar, Erhard, D-78176 Blumberg (DE)
(74) Vertreter: Patentanwälte Westphal, Buchner, Mussgnug Neunert, Göhring

(56) Entgegenhaltungen:
- DE-C- 681 040
- US-A- 1 428 712
- US-A- 4 296 551

## Beschreibung

Die Erfindung betrifft eine Vorrichtung zum Abschneiden von Rohren gemäß Oberbegriff von Patentanspruch 1; siehe DE-C 681 040.

Zum Abschneiden von Rohren werden Rohrabschneider verwendet, die feststehende Messer oder drehbar gelagerte Messerscheiben aufweisen. Die im wesentlichen punktförmige Einleitung der Schnittkraft bei diesen Rohrabschneidern führt bei dünnwandigen Rohren zu einer Verformung. Dieses Problem tritt insbesondere bei Kunststoffrohren und dünnwandigen Stahlrohren auf.

Um einer solchen Verformung des Rohres entgegenzuwirken wird bei einer Vorrichtung, wie sie beispielsweise aus DE 27 43 151 A1 und DE 79 04 781 U1 bekannt ist, eine Manschette um das Rohr gelegt, die das Rohr fest einspannt. Ein Schneidwerkzeug ist an der Manschette gelagert und kann auf der Manschette geführt um das Rohr herum bewegt werden, um dieses an einer Schnittlinie axial neben der Manschette zu durchtrennen.

Die Manschette hält das Rohr zwar auf einer Seite der Schnittlinie fest umschlossen, so daß eine Verformung des Rohres unter dem Druck des Schneidwerkzeuges zunächst nicht möglich ist. Ist das Rohr jedoch bereits über mehr als die Hälfte seines Umfangs durchtrennt, so kann sich der bereits abgetrennte Teil des freien Rohrstückes unabhängig von dem eingespannten festen Teil bewegen, so daß eine Verformung in dem noch nicht durchtrennten Teil der Rohrwand auftritt, die sich auch auf den durch die Manschette eingespannten Rohrteil auswirkt. Bei dünnwandigen Rohren geringer Formstabilität können sich daher trotz der Einspannung des Rohres durch die Manschette unbefriedigende Schnittkanten ergeben.

Für jeden Rohrdurchmesser wird eine Manschette mit entsprechendem Durchmesser benötigt. Da das Schneidwerkzeug drehbar geführt auf der Manschette gelagert ist, ist somit auch für jede Manschette ein gesondertes Schneidwerkzeug notwendig. Dies ist nachteilig, da der Monteur einen ganzen Satz von Vorrichtungen für unterschiedliche Rohrdurchmesser käuflich erwerben und bei Montagearbeiten mit sich führen muß.

Weiter sind z. B. aus DE 28 10 910 C2 Kettenrohrabschneider bekannt, die eine um das abzuschneidende Rohr spannbare Gelenkkette aufweisen, auf deren Gelenkbolzen Messerscheiben gelagert sind, die das Rohr durchtrennen. Die Kettenrohrabschneider haben den Vorteil, daß dasselbe Werkzeug für unterschiedliche Rohrdurchmesser verwendet werden kann, wozu nur unterschiedlich lange Gelenkketten in das Werkzeug eingesetzt werden müssen. Auch bei den Kettenrohrabschneidern wird die Schnittkraft im wesentlichen punktförmig eingeleitet, so daß ebenfalls die vorstehend erläuterten Probleme auftreten.

Aus DE 90 11 516 U1 ist es bekannt, zum Durchtrennen eines gewellten Schlauches auf diesem Schlauch zwei rohrförmige Manschetten festzulegen. Die Manschetten greifen jeweils mit einem Innenflansch in ein Wellental des Schlauches und sind dadurch gegenseitig axial so positioniert, daß sie einen Führungsspalt für ein Trennwerkzeug, beispielsweise eine Säge, bilden, der im Bereich eines Wellenkammes des Schlauches angeordnet ist. Dadurch wird gewährleistet, daß der Schlauch stets im Bereich eines Wellenkammes durchtrennt wird. Schnittgrate, die an der Trennlinie entstehen können, ragen daher nicht in den freien Innenquerschnitt des gewellten Schlauches hinein, der durch die Wellentäler bestimmt ist. Die Manschetten liegen nur in axialer Richtung auf dem gewellten Schlauch fest und definieren eine exakte Führung für das Trennwerkzeug. Eine Verformung des Schlauches unter dem Schneiddruck des Trennwerkzeuges wird durch die Manschetten nicht verhindert.

Der Erfindung liegt die Aufgabe zugrunde, eine Vorrichtung zum Abschneiden von Rohren zur Verfügung zu stellen, die auch bei dünnwandigen Rohren geringer Formstabilität ein Abschneiden des Rohres ohne Verformung ermöglicht und die kostengünstig ist.

Diese Aufgabe wird an einer Vorrichtung gemäß Oberbegriff von Patentanspruch 1 erfindungsgemäß durch dessen kennzeichnende Merkmale gelöst.

Vorteilhafte Ausführungsformen der Erfindung sind in den Unteransprüchen angegeben.

Erfindungsgemäß wird das Rohr beiderseits der Schnittlinie jeweils durch eine Manschette umschlossen und eingespannt. Auch am Ende des Schneidvorgangs, wenn die beiden Rohrteile nur noch über einen schmalen Wandstreifen zusammenhängen, ist eine Verformung nicht möglich, da die Schnittränder beider Rohrteile durch die jeweilige Manschette exakt kreisförmig gehalten werden. Eine gegenseite Verschiebung der beiden Rohrstücke im Bereich der Schnittlinie ist ebenfalls nicht möglich, da die gespannte Gelenkkette des Kettenrohrabschneiders das Rohr im Bereich der Schnittlinie umspannt und die beiden Rohrstücke, auch wenn diese nahezu vollständig oder vollständig voneinander getrennt sind, in ihrer gegenseitigen Lage hält.

Für unterschiedliche Rohrdurchmesser werden nur Manschetten mit entsprechend unterschiedlichen Durchmessern benötigt. Da der Kettenrohrabschneider mit den Manschetten nicht verbunden ist, kann aber derselbe Kettenrohrabschneider eingesetzt werden, bei dem selbstverständlich eine Gelenkkette der passenden Länge eingesetzt werden muß. Da nur ein Kettenrohrabschneider für unterschiedliche Rohrdurchmesser benötigt wird, ist die Vorrichtung kostengünstig und für Montagearbeiten muß eine geringere Anzahl von Werkzeugen mitgeführt werden.

Die beiderseits der Schnittlinie auf dem Rohr festgelegten Manschetten führen die Messerscheiben des Kettenrohrabschneiders präzise auf der Schnittlinie, so daß sich ein exakter Schnitt ergibt und ein Wandern des Kettenrohrabschneiders oder ein Verziehen der Schnittlinie ausgeschlossen sind, obwohl der Kettenrohrabschneider nicht an den Manschetten angebracht ist.

Vorzugsweise sind auf den die Messerscheiben lagernden Gelenkbolzen der Gelenkkette Rollen angeordnet, die zweckmäßigerweise einstückig mit den Messerschneiden ausgebildet sein können. Diese Rollen stützen sich auf den Manschetten ab und dienen somit als Distanzhalter, welche die Schnittiefe der Messerscheiben begrenzen.

Die Manschetten können als geschlossene Manschette auf das zu schneidende Rohr geschoben werden. Dies ist in der Regel unzweckmäßig und häufig sogar unmöglich, wenn das zu schneidende Rohr kein freies Ende aufweist. Die Manschetten bestehen daher vorzugsweise aus zwei Kalbschalen, die um das Rohr gelegt werden können.

Vorzugsweise weisen die Manschetten einen rohrstutzenförmigen Ansatz und einen sich daran anschließenden Kragen größerer radialer Stärke auf. Der Kragen mit der größeren Wandstärke ermöglicht das Anbringen von Spannschrauben und Schwenkgelenken für die Halbschalen. Außerdem gibt der Kragen mit seiner größeren Wandstärke der Manschette eine gute mechanische Festigkeit, so daß der rohrstutzenförmige Ansatz mit relativ geringer Wandstärke ausgebildet sein kann. Die geringe Wandstärke des rohrstutzenförmigen Ansatzes eignet sich vorteilhafterweise dazu, die als Distanzhalter dienenden Rollen auf diesem Ansatz laufen zu lassen. Je geringer die Wandstärke des Stutzens ist, umso weniger muß die Messerscheibe radial über die als Distanzhalter dienenden Rollen hinausragen.

Auch wenn die Manschetten mit rohrstutzenförmigem Ansatz und Kragen ausgebildet sind, können die zwei jeweils verwendeten Manschetten eine identische Form aufweisen. Sie müssen nur spiegelsymmetrisch mit gegeneinander gerichteten Ansätzen auf dem Rohr angeordnet werden. Die identische Form beider Manschetten verringert die Kosten für Herstellung und Lagerhaltung.

Der verwendete Kettenrohrabschneider kann prinzipiell so gebaut sein, wie dies in DE 28 10 910 C2 gezeigt ist. Dieser Kettenrohrabschneider weist einen Griffhebel mit einem gabelförmig gespreizten Maulteil auf. An dem einen Schenkel des Maulteils ist die Gelenkkette befestigt, indem die erste Messerscheibe der Gelenkkette in diesem Schenkel gelagert ist. Der andere Schenkel dient zur Führung des freien Endes der Gelenkkette, welches in dem Griffhebel eingehängt und gespannt wird. Zum Betätigen des Kettenrohrabschneiders wird der Griffhebel so verschwenkt, daß der eine Schenkel des Maulteils mit der zugeordneten Messerscheibe gegen das zu schneidende Rohr gedrückt wird. Die Öffnungsbreite des Maulteils muß dabei auf den Durchmesser des Rohres abgestimmt sein. Nur bei einer ausreichenden Maulbreite wird beim Verschwenken des Griffhebels der Messerscheibe, die an dem gegen das Rohr gedrückten Schenkel angeordnet ist, eine Kraftkomponente tangential zum Rohr erteilt, so daß die Gelenkkette mit den Messerscheiben in eine Bewegung um das Rohr herum versetzt wird und die Messerscheiben einen ziehenden Schnitt ausführen können. Ist die Breite des Maulteils im Verhältnis zum Rohrdurchmesser zu klein, so daß der Winkelabstand der beiden den Schenkeln zugeordneten letzten am Rohr angreifenden Messerscheiben etwa 75° oder kleiner wird, so wird beim Verschwenken des Griffhebels der Messerscheibe des belasteten Schenkels des Maulteiles eine im wesentlichen radial zum Rohr wirkende Kraft erteilt. Die Messerscheibe wird daher nur noch gegen die Rohrwand gedrückt, es wird jedoch der Gelenkkette insgesamt nicht die notwendige Bewegung in Umfangsrichtung erteilt, so daß der Rohrabschneider nicht mehr funktionsfähig ist. Dieser im wesentlichen herkömmlich aufgebaute Rohrabschneider eignet sich daher nur für einen bestimmten Bereich von Rohrdurchmessern bzw. für einen bestimmten Durchmesserbereich der Manschetten.

In einer vorteilhaften Ausführungsform der Erfindung ist daher der Kettenrohrabschneider so ausgebildet, daß an den Schenkeln seines Maulteiles Stützrollen gelagert sind, die sich beim Spannen der Gelenkkette auf dem Außenumfang der Manschetten abstützen. Wird der Griffhebel bei der Betätigung des Kettenrohrabschneiders verschwenkt, so wird die abstützende Kraft über den Schenkel des Maulteils und die Stützrollen in die Manschette eingeleitet und nicht über die Messerscheiben in die Rohrwand. Die Gelenkkette kann in dem Maulteil des Kettenrohrabschneiders so geführt werden, daß die Messerscheiben erst in einem im wesentlichen tangential zum Rohr verlaufenden Bereich der Gelenkkette in die Rohrwand eindringen. Es kann somit der Kettenrohrabschneider mit demselben Maulteil für einen erheblich größeren Durchmesserbereich des Rohres bzw. der Manschetten verwendet werden, ohne daß der im wesentlichen ziehende Schnitt der Messerscheiben und damit die Funktionsweise der Vorrichtung beeinträchtigt werden.

Im folgenden wird die Erfindung anhand eines in der Zeichnung dargestellten Ausführungsbeispiels näher erläutert. Es zeigen:
- Figur 1 -: eine teilweise aufgebrochene Stirnansicht der Vorrichtung und
- Figur 2 -: einen Schnitt durch die Vorrichtung gemäß Linie II-II in Figur 1.

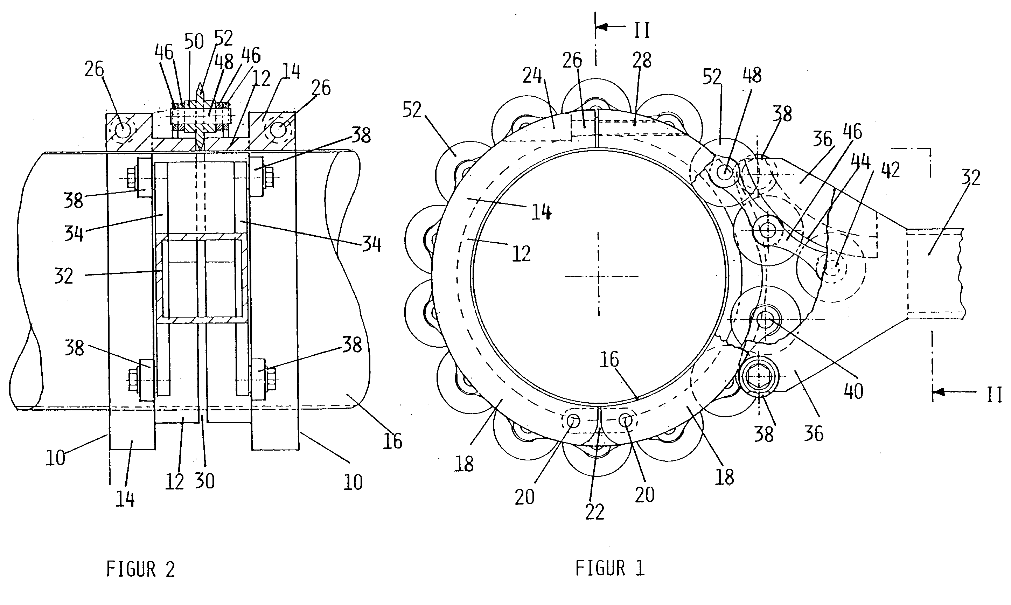

Die Vorrichtung weist zwei, vorzugsweise aus einem geeigneten Metall hergestellte Manschetten 10 auf. Jede Manschette 10 besteht aus einem rohrstutzenförmigen Ansatz 12, mit geringer Wandstärke, an welchen sich axial ein Kragen 14 mit größerer radialer Wandstärke einstückig anschließt. Der Ansatz 12 und der Kragen 14 weisen durchgehend denselben kreisförmigen Innendurchmesser auf, der dem Außendurchmesser eines abzuschneidenden Rohres 16 entspricht. Wie aus Figur 1 zu erkennen ist, sind die Manschetten 10 jeweils entlang einer axialen Ebene in zwei Halbschalen 18 getrennt. An einer Seite sind die beiden Halbschalen 18 im Bereich des Kragens 14 gelenkig miteinander verbunden. Hierzu sind die beiden Halbschalen 18 jeweils mittels eines Gelenkstiftes 20 an einer Verbindungslasche 22 angelenkt.

Auf der diametral gegenüberliegenden Seite ist in der einen Halbschale 18 (in Figur 1 in der linken Halbschale) eine Aussparung 24 im Außenumfang des Kragens 14 vorgesehen, die in eine in Tangentialrichtung verlaufende Bohrung 26 übergeht. In der anderen Halbschale 18 (in Figur 1 in der rechten Halbschale) ist eine in tangentialer Richtung verlaufende Gewindebohrung 28 vorgesehen, die bei geschlossener Manschette 10 mit der Bohrung 26 der anderen Halbschale 18 fluchtet. In die Bohrung 26 ist eine nicht dargestellte Zylinderschraube einsetzbar, die in die Gewindebohrung 28 eingedreht wird, wobei die Aussparung 24 den Kopf der Schraube aufnimmt.

Um die Manschetten 10 auf das Rohr 16 aufzusetzen, wird die Schraube herausgenommen, so daß die Kalbschalen 18 um ihre gelenkige Verbindung auseinandergeschwenkt und um das Rohr 16 gelegt werden können. Dann wird die Schraube in die Bohrung 26 eingesetzt und in die Gewindebohrung 28 eingedreht, um die Halbschalen 18 gegeneinander zu ziehen und die Manschetten 10 auf dem Rohr 16 zu verspannen.

Die beiden Manschetten 10 werden so auf dem Rohr 16 festgelegt, daß ihre Ansätze 12 gegeneinander gerichtet sind. Zwischen den einander zugewandten Stirnflächen der Ansätze 12 bleibt dabei ein axialer Abstand 30, in welchem die Schnittlinie verläuft, an welcher das Rohr 16 durchtrennt werden soll.

Zum Durchtrennen des Rohres 16 dient ein Kettenrohrabschneider. Dieser weist einen Griffhebel 32 auf, der an seinem vorderen Ende in ein gabelförmig gespreiztes Maulteil übergeht. Das Maulteil besteht aus zwei parallelen Backen 34, die in Axialrichtung des Rohres 16 voneinander beabstandet sind. Die beiden Backen 34 laufen gabelförmig jeweils in Schenkel 36 aus. An den Enden der so gebildeten vier Schenkel 36 ist jeweils an der Außenseite des Schenkels 36 eine drehbar gelagerte Stützrolle 38 angeordnet. Wird der Kettenrohrabschneider mit seinem Maulteil auf die an dem Rohr 16 gespannten Manschetten 10 aufgesetzt, so stützen sich die Stützrollen 38 jedes Backens 34 jeweils auf dem Kragen 14 einer der Manschetten 10 ab.

Eine Gelenkkette des Kettenrohrabschneiders ist mit ihrem einen Ende 40 in dem Maulteil des Kettenrohrabschneiders festgelegt. Die Gelenkkette wird um das Rohr 16 herumgelegt. Das freie andere Ende 42 der Gelenkkette wird über eine Führung 44 des Maulteils in den Griffhebel 32 geführt und in eine nicht dargestellte Spannvorrichtung eingehängt, mittels welcher die um das Rohr 16 herumgelegte Gelenkkette gespannt werden kann.

Die Gelenkkette besteht aus Laschen 46, die mittels Gelenkbolzen 48 miteinander verbunden sind. Auf den Gelenkbolzen 48 ist jeweils drehbar eine Rolle 50 gelagert. Die Rollen 50 weisen in ihrer axialen Längsmitte eine radial abstehende Messerscheibe 52 auf, die einstückig an der Rolle 50 angeformt ist.

Die Gelenkkette des Kettenrohrabschneiders wird um die Manschetten 10 gelegt, wobei die Messerscheiben 52 in den Spalt 30 zwischen den Ansätzen 12 der Manschetten 10 eingreifen und die Rollen 50 sich beiderseits dieses Spaltes 30 auf dem Außenumfang der Ansätze 12 abstützen. Die Rollen 50 bestimmen als Distanzhalter die Schnittiefe der Messerscheiben 52, indem sich die Schnittiefe aus der Differenz der radialen Höhe der Messerscheiben 52 und der radialen Wandstärke der Ansätze 12 ergibt. Die radiale Höhe der Messerscheiben 52 ist dabei die Differenz der Radien von Messerscheiben 52 und Rolle 50.

Ist die Gelenkkette des Kettenrohrabschneiders um die Manschetten 10 gespannt, so kann das Rohr 16 längs der zwischen den Manschetten 10 liegenden Schnittlinie durchtrennt werden, wozu der Griffhebel 32 des Kettenrohrabschneiders um das Rohr 16 geschwenkt wird. Bei diesem Schwenken des Griffhebels 32 stützt sich das Maulteil mit den in Schwenkrichtung weisenden Stützrollen 38 auf den Kragen 14 der Manschetten 10 ab. Die Manschetten 10 nehmen dadurch die gesamte Krafteinleitung des Kettenrohrabschneiders auf. Auf die Messerscheiben 52 im Bereich der in Schwenkrichtung weisenden Schenkel 36 wird keine radial zum Rohr 16 gerichtete Druckkraft ausgeübt. Die am entgegengesetzten Ende der Gelenkkette angreifende Zugkraft kann dadurch die Gelenkkette unbehindert um das Rohr 16 ziehen.

Da das Rohr 16 auf beiden Seiten der Schnittlinie an seinem gesamten Umfang durch jeweils eine Manschette 10 eingespannt ist, können sich die beim Durchschneiden des Rohres 16 bildenden Schnittkanten des Rohres 16 trotz der im wesentlichen punktförmig eingeleiteten Schneidkraft der Messerscheiben 52 nicht verformen. Da die Gelenkkette mit den Rollen 50 die Ansätze 12 beider Manschetten 10 unter Spannung umschließt, können sich auch am Ende des Schneidvorganges die Schnittkanten des bereits durchtrennten Rohrumfanges nicht gegeneinander verschieben, was über den noch nicht durchtrennten Wandabschnitt zu einer Verformung führen könnte.

## Patentansprüche

1. Vorrichtung zum Abschneiden von Rohren, mit einem Kettenrohrabschneider, der an einer um das zu schneidende Rohr (16) spannbaren Gelenkkette gelagerte Messerscheiben (52) aufweist, und mit zwei an dem Rohr (16) festlegbaren, dieses in einem die Schnittlinie freilassenden axialen Abstand (30) einspannenden Manschetten (10), dadurch gekennzeichnet, daß die Manschetten (10) formstabil mit kreisförmigem Innenquerschnitt ausgebildet sind und daß auf den die Messerscheiben (52) lagernden Gelenkbolzen (48) der Gelenkkette des Kettenrohrabschneiders Rollen (50) gelagert sind, die einen kleineren Durchmesser als die Messerscheiben (52) aufweisen und sich als die Schnittiefe begrenzende Distanzhalter auf dem Außenumfang wenigstens einer Manschette (10) abstützen.

2. Vorrichtung nach Anspruch 1, dadurch gekennzeichnet, daß die erste und die zweite Manschette (10) die gleiche Form haben.

3. Vorrichtung nach Anspruch 1 oder 2, dadurch gekennzeichnet, daß die Manschetten (10) jeweils aus zwei um das Rohr (16) legbaren Halbschalen (18) bestehen, die miteinander verspannbar sind.

4. Vorrichtung nach Anspruch 3, dadurch gekennzeichnet, daß die beiden Halbschalen (18) an einer Seite gelenkig miteinander verbunden sind und an der diametralen Seite mittels einer Schraube lösbar miteinander verspannbar sind.

5. Vorrichtung nach einem der vorhergehenden Ansprüche, dadurch gekennzeichnet, daß die Manschetten (10) jeweils einen rohrstutzenförmigen Ansatz (12) mit geringer Wandstärke und einen sich daran anschließenden Kragen (14) größerer radialer Wandstärke aufweisen und daß die zwei Manschetten (10) spiegelsymmetrisch mit gegeneinander gerichteten Ansätzen (12) auf dem Rohr (16) angeordnet sind.

6. Vorrichtung nach den Ansprüchen 4 oder 5, dadurch gekennzeichnet, daß die Schraube in dem Kragen (14) der Manschette (10) angeordnet ist.

7. Vorrichtung nach einem der vorhergehenden Ansprüche, dadurch gekennzeichnet, daß auf den die Messerscheiben (52) lagernden Gelenkbolzen (48) der Gelenkkette des Kettenrohrabschneiders Rollen (50) gelagert sind, die einen kleineren Durchmesser als die Messerscheiben (52) aufweisen und sich als die Schnittiefe begrenzende Distanzhalter auf dem Außenumfang wenigstens einer Manschette (10) abstützen.

8. Vorrichtung nach Anspruch 7, dadurch gekennzeichnet, daß die Messerscheiben (52) und die Rollen (50) einstückig ausgebildet sind.

9. Vorrichtung nach einem der vorhergehenden Ansprüche, dadurch gekennzeichnet, daß der Kettenrohrabschneider einen Griffhebel (32) mit einem gabelförmig gespreizten Maulteil aufweist, dessen Schenkel (36) sich über drehbar gelagerte Stützrollen (38) auf den Manschetten (10) abstützen.

10. Vorrichtung nach Anspruch 9, dadurch gekennzeichnet, daß das Maulteil zwei parallele, im Abstand zueinander angeordnete Backen (34) aufweist, wobei jeder Backen (34) zwei gabelförmig gespreizte Schenkel (36) aufweist und wobei sich die Stützrollen (38) der Schenkel (36) jedes Backens (34) auf dem Kragen (14) einer Manschette (10) abstützen.

## Claims

1. A device for cutting pipes, having a chain pipe cutter, which comprises cutter disks (52) mounted on a link chain which can be clamped around the pipe (16) to be cut, and having two clamping sleeves (10) which can be fixed to the pipe (16) with an axial spacing (30) leaving clear the cutting line,
**characterised in that** the sleeves (10) are constructed in a dimensionally stable manner with a circular internal cross section,
**and in that** rollers (50), which have a smaller diameter than the cutter disks (52) and are supported on the outer periphery of at least one sleeve (10) as distance pieces limiting the cutting depth, are mounted on the hinge pins (48) of the link chain of the chain pipe cutter bearing the cutter disks.

2. A device according to claim 1,
**characterised in that** the first and the second sleeves (10) have the same shape.

3. A device according to Claim 1 or 2,
**characterised in that** the sleeves (10) each consist of two half shells (18) which can be laid around the pipe (16) and which can be braced with respect to one another.

4. A device according to Claim 3,
**characterised in that** the two half shells (18) are connected to one another by a hinge at one side and can be detachably braced with respect to one another at the diametral side by means of a screw.

5. A device according to one of the preceding Claims, **characterised in that** the sleeves (10) each comprise a projection (12) shaped as a connecting sleeve having a small wall thickness and an adjacent collar (14) having a greater radial wall thickness,
and in that the two reflectionally symmetrical sleeves (10) are disposed on the pipe (16) with projections (12) directed towards one another.

6. A device according to Claims 4 or 5,
**characterised in that** the screw is disposed in the collar (14) of the sleeve (10).

7. A device according to one of the preceding Claims, **characterised in that** rollers (50), which have a smaller diameter than the cutter disks (52) and are supported on the outer periphery of at least one sleeve (10) as distance pieces limiting the cutting depth, are mounted on the hinge pins (48) of the link chain of the chain pipe cutter bearing the cutter disks (52).

8. A device according to Claim 7,
**characterised in that** the cutter disks (52) and the rollers (50) are constructed in one piece.

9. A device according to one of the preceding Claims, **characterised in that** the chain pipe cutter comprises a handle (32) having a mouth part expanded in a fork shape, the sides (36) of which are supported on the sleeves (10) via rotatably mounted support rollers (38).

10. A device according to Claim 9,
**characterised in that** the mouth part comprises two parallel jaws (34) disposed at a distance from one another, whereby each jaw (34) comprises two sides (36) expanded in a fork shape and whereby the support rollers (38) of the sides (36) of each jaw (34) are supported on the collar (14) of a sleeve (10).

## Revendications

1. Dispositif pour couper des tubes avec un découpeur de tube à chaîne, qui présente des disques à couteaux (52) montés sur une chaîne articulée que l'on peut tendre autour du tube à couper (16), et deux manchettes (10) à serrer sur le tube (16)à une distance axiale (30) qui laisse libre la ligne de coupe ; dispositif caractérisé en ce que les manchettes (10) sont constituées de façon indéformable avec une section transversale intérieure de forme circulaire, et en ce que, sur les axes d'articulation (48) qui reçoivent les disques à couteaux (52) de la chaîne articulée du découpeur de tube à chaîne, sont montés des galets (50), qui présentent un plus petit diamètre que les disques à couteaux (52) et s'appuient, en tant qu'écarteurs limitant la profondeur de coupe, sur le pourtour extérieur d'au moins une manchette (10).

2. Dispositif selon la revendication 1, caractérisé en ce que la première et la seconde manchettes (10) ont la même forme.

3. Dispositif selon la revendication 1 ou 2, caractérisé en ce que les manchettes (10) consistent respectivement en deux demi-coquilles (18) que l'on peut mettre autour du tube (16) et que l'on peut serrer ensemble.

4. Dispositif selon la revendication 3, caractérisé en ce que les deux demi-coquilles (18) sont reliées l'une à l'autre de façon articulée sur un côté et peuvent être serrées de façon amovible sur le côté diamétralement opposé, au moyen d'une vis.

5. Dispositif selon l'une des revendications précédentes, caractérisé en ce que les manchettes (10) présentent respectivement un appendice en forme d'ajutage de tube (12) avec une faible épaisseur de paroi et un collet qui s'y raccorde (14) dont l'épaisseur radiale de paroi est plus grande, et en ce que les deux manchettes (10) sont disposées de façon symétrique sur le tube (16) avec leurs appendices (12) orientés en sens contraires.

6. Dispositif selon les revendications 4 ou 5, caractérisé en ce que la vis est disposée dans le collet (14) de la manchette (10).

7. Dispositif selon l'une des revendications précédentes, caractérisé en ce que, sur les axes d'articulation (48) de la chaîne articulée du découpeur de tube à chaîne, qui portent les disques à couteaux (52), sont montés des galets (50) qui présentent un plus petit diamètre que les disques à couteaux (52) et s'appuient, en tant qu'écarteurs limitant la profondeur de coupe, sur le pourtour extérieur d'au moins une manchette (10).

8. Dispositif selon la revendication 7, caractérisé en ce que les disques à couteaux (52) et les galets (50) sont constitués d'une seule pièce.

9. Dispositif selon l'une des revendications précédentes, caractérisé en ce que le découpeur de tube à chaîne présente un levier d'agrippement (32) avec une mâchoire écartée en forme de fourche, dont les branches (36) s'appuient au moyen de galets d'appui (38) montés de façon à pouvoir tourner sur les manchettes (10).

10. Dispositif selon la revendication 9, caractérisé en ce que la mâchoire présente deux joues parallèles (34) disposées à distance l'une de l'autre, chaque joue (34) présentant deux branches (36) écartées en forme de fourche, et les galets d'appui (38) des branches (36) de chaque joue (34) s'appuyant sur le collet (14) d'une manchette (10).
